# EUROPEAN PATENT SPECIFICATION

(11) **EP 2 712 295 B1**
(45) Date of publication and mention of the grant of the patent: **31.08.2016**
(21) Application number: 12712780.1
(22) Date of filing: 13.03.2012
(51) Int. Cl.: A47J 31/18, A47J 31/46

(54) **PREPARATION OF AN ARABIC COFFEE BEVERAGE**
ZUBEREITUNG EINES ARABISCHEN KAFFEEGETRÄNKS
PRÉPARATION DE BOISSON À BASE DE CAFÉ ARABICA

(30) Priority: 14.03.2011 NL 2006380
(43) Date of publication of application: 02.04.2014
(73) Proprietor: Moka Istanbul Kahve Gida Makina Pazarlama A.S., 34303 Halkali, Kücükcekmece, Istanbul (TR)
(72) Inventor: VERBEEK, Roland, Waldemar, 1272 ND HUIZEN (NL)
(74) Representative: EP&C
(86) International application number: PCT/NL2012/050156
(87) International publication number: WO 2012/125032

(56) References cited:
- WO-A1-2008/132571
- WO-A1-2011/007266
- WO-A2-2004/065225
- DE-A1- 19 722 320
- US-A- 3 085 880
- US-A- 4 471 689
- US-A1- 2008 028 946
- US-B1- 6 339 985

## Description

The present invention relates to the preparation of a single serving of an Arabic coffee beverage, often indicated with the term Turkish coffee beverage. Turkish coffee is known under many names, such as Arabic coffee, and generally refers to similar methods of preparing a coffee beverage. These methods are well known in variants throughout the world, e.g. in Turkey, Greece, the Middle East, North Africa, the Caucasus and the Balkans.

Traditionally an Arabic or Turkish coffee is prepared by boiling finely ground roasted coffee beans in a boiling pot, often with sugar, sometimes with cardamom, and serving the boiled coffee in a cup, where the coffee dregs settle in the cup. The term Turkish coffee does not refer to a particular variety of coffee beans, but to the preparation process. The traditional process may involve bringing the coffee to boil, then removing the pot from the heat source for some time, and then bringing the coffee to boil for a second time and a third time. Then the coffee is poured into a cup. A head of foam is formed in the process and poured into the cup as well.

Whilst the traditional preparation process for such a coffee beverage provides highly attractive coffee, many coffee drinkers consider the process too elaborate and time-consuming.

WO2011/007266 discloses a system for the preparation of an Arabic coffee beverage, comprising a single serving disposable cartridge and a preparation device. In this system the cartridge is punched so that the ground roasted coffee is deposited in a boiling reservoir. Hot water and steam are supplied to the boiling reservoir and a boiling process is performed. The boiled product is then allowed to flow in a cup. In an alternative this document proposes that the ground roasted coffee is deposited from the cartridge directly into the cup, with the hot water and steam then being supplied to the cup.

The system proposed in WO2011/007266 is unsatisfactory, mainly in view of the quality of the beverage that is obtained and the complexity of the preparation device.

The present invention aims to propose measures that allow for an attractive preparation of an Arabic coffee beverage.

The present disclosure proposes systems, methods, preparation devices, and cartridges for preparation of an Arabic coffee beverage.

The invention provides a system according to the preamble of claim 1, which is characterized in that the water feed means and the cartridge are adapted to introduce the water into the chamber of the cartridge containing the ground roasted coffee, wherein the cartridge is embodied such that the ground roasted coffee therein is entrained with the water that is introduced into the cartridge and is dispensed as a mixture with said water from the cartridge via one or more outlets,
and in that the boiling reservoir is arranged to receive said mixture from the cartridge,
and in that the boiling reservoir is provided with a heater which is adapted to heat the mixture in the boiling reservoir so as to subject the mixture to the boiling process.

The invention thus proposes that a mixture of water and ground roasted coffee is created within the cartridge itself and that said mixture is deposited in the boiling reservoir. This allows for an intimate mixing of the water and the ground roasted coffee.

In a preferred embodiment, the water feed means are adapted to feed cold, non-heated water to the cartridge, thereby allowing to dispense with a water heater in the device which reduces costs of the device and technical complexity. In an alternative, there is a water heater to heat the water prior to introduction into the cartridge, possibly already causing some extraction of the coffee when hot water is introduced into the cartridge.

It is preferred that all coffee grounds, preferably at least 80% thereof, are emptied from the cartridge by the flushing of the water through the cartridge.

The mixture is held for some time in the boiling reservoir and then subjected to a boiling process. This process may involve bringing the mixture to actual boiling, as is preferred, but may also involve bringing the mixture to a near boiling temperature, e.g. above 90°C, e.g. 97°C.

The boiling process could be done for a predetermined time period, or possibly for several time periods separated by periods wherein heating is stopped or reduced to take the mixture just below boiling temperature.

The boiling processes could also be governed by detection of actual boiling via one or more sensors associated with the boiling reservoir, e.g. a sensor detecting the formation of a foam head on the mixture in the reservoir (as is known for Arabic coffee preparation) and/or a sensor detecting the temperature or change thereof (e.g. as explained in WO2011002421) of the mixture in the reservoir.

Once the boiling process is completed, the boiled mixture is discharged from the boiling reservoir, e.g. dispensed into a serving cup. It is also envisaged that in an embodiment the boiled mixture is dispensed from the boiling reservoir at intervals in several portions, e.g. a first portion with a significant amount of foam and a second portion with little foam, which second portion can e.g. be boiled some time longer than the first portion.

The inventive system allows to obtain a beverage that has significant similarity to a traditionally prepared Arabic or Turkish coffee.

In a preferred embodiment the cartridge is held stationary during the actual preparation of the beverage. In an alternative the cartridge is moved, e.g. spinned around an axis by a suitable motorized drive to create a centrifugal effect on the water and the roasted ground coffee therein to assist, or obtain, the discharge of the mixture from the cartridge. A centrifugal holder for a disposable cartridge is e.g. known from WO2008148656 (Nestec).

In a practical embodiment the boiling reservoir is a receptacle, preferably an open topped receptacle, e.g. a metal cup shape receptacle or a cup shape receptacle having at least one metal wall portion, e.g. the bottom of the receptacle.

Possibly the boiling vessel, e.g. receptacle, has a non-stick coating, e.g. of PTFE.

In a possible embodiment, the boiling reservoir is an open topped receptacle having a bottom part that is at least partly made of metal, e.g. steel, and a circumferential wall that is made of a heat resistant plastic. It is possible that the metal bottom part is provided with an electrical heater, e.g. a thick film heater.

In a preferred embodiment the receptacle is movably supported in the device so as to be movable between a receiving position, wherein the mixture is received from the cartridge, and a dispensing position, wherein boiled mixture is dispensed from the boiling reservoir. This e.g. allows to embody the boiling reservoir without a valve to control the outflow of the boiled mixture.

In an embodiment the preparation device comprises a cup support for supporting a drinking cup at a position to receive the prepared beverage from the boiling reservoir.

In a practical embodiment the boiling reservoir receptacle is mounted tiltable in the device, e.g. by a motor drive. For example with an open topped receptacle, the tilting to the dispensing position causes the boiled mixture to flow over the rim of the receptacle. Preferably the boiling reservoir is provided with a pour spout, most preferably at the rim of the receptacle. The receptacle may be tilted - as is preferred - such that also coffee grounds that have settled on the bottom of the receptacle are dispensed from the receptacle, e.g. into a cup positioned underneath or next to the receptacle.

Preferably, the boiling reservoir receptacle is tilted gradually at a low speed. This allows the foam or froth layer that may have formed on the surface of the coffee to remain substantially intact when flowing into the drinking cup.

In a possible embodiment, the receptacle is tiltable about a horizontal tilting axis which is arranged outside the boiling reservoir receptacle, e.g. directly adjacent or underneath a pour spout of the boiling reservoir.

In a preferred embodiment the boiling reservoir is provided with an electric heater, e.g. the boiling reservoir having a metal element, e.g. a wall or bottom, heated by an electric heater. The heater preferably is mounted directly on or in the boiling reservoir, possibly heating the reservoir wall or bottom itself (which then heats the mixture) or directly heating the mixture. In another embodiment the heater is an electric hot-air heater, directing a stream of hot air to the reservoir. It will be appreciated that other heaters can be applied as well to heat the boiling reservoir or the mixture held therein.

As is preferred no use is made of steam in the device for the heating of the mixture in the boiling reservoir, as this causes technical complexity of the device.

In an embodiment the preparation device includes a main housing and a removable unit that is user removable from the main housing, e.g. for cleaning. For example the unit is removable from a front side of the main housing, e.g. the unit can be pulled forward to remove it and pushed back into the main housing to place it back. The removable unit comprises a base, the boiling reservoir, and preferably an electric heater for heating the boiling reservoir, the boiling reservoir being movable supported on the base, preferably the base being provided with a tilting mechanism to support the boiling reservoir in tiltable manner.

In an embodiment with an electric heater, it is preferred that the boiling reservoir and electric heater are integrated into a subunit that is user detachable from the base when the removable unit has been removed from the main housing. This allows the user to clean the subunit, e.g. under the tap or even in a dishwasher when suitably designed.

In an embodiment the base is provided with a first electrical connector part that detachably connects to a corresponding electrical connector part on the main housing, and wherein the base is provided with a second electrical connector part that detachably connects to a corresponding electrical connector part on the subunit in order to provide electricity to the electric heater.

In order to obtain a good quality mixing of the water and ground coffee the cartridge is embodied preferably such that a swirling motion of the ground roasted coffee in the chamber is caused when water is introduced into the cartridge.

In a practical embodiment the cartridge has an inlet for water and one or more nozzles in communication with said inlet, said nozzles each directing a jet of water into the chamber so as to cause said swirling motion.

In a preferred embodiment the cartridge has multiple, e.g. two to six, nozzles causing in the chamber simultaneously swirls in different directions, e.g. a clock-wise as well as a counter-clockwise swirl. Due to the provision of swirls in different directions that also collide with one another in the chamber of the cartridge, a very turbulent flow is caused, which results in a very good mixing as well as entraining of the ground coffee with the water.

In a preferred embodiment the cartridge has a bottom and a circumferential wall delimiting the chamber, in which the body furthermore has a column which is connected to a portion of the bottom and which column is preferably situated centrally in the chamber, which column projects upwards from the bottom to an upper side of the column, through which column a water channel extends from an inlet on the upper side of the column to one or more nozzles in the column.

In a possible embodiment, the nozzles are formed by apertures in the wall of the column, which apertures provide fluid communication between the water channel in the column and the chamber of the cartridge.

In a possible embodiment, the column comprises a first part and a second part. The first part is integral with the cartridge and extends from the bottom of the cartridge upward. The second part of the column in this particular embodiment is a separate element, that is fixed to or arranged on the top of the first part of the column, e.g. by clamping or by a loose fit. In use, the second part of the column will receive the water that has to be introduced into the chamber of the cartridge, for example from a water feed lance that engages the second part of the column. The second part of the column comprises a channel to receive this water and transport it to the chamber of the cartridge. The first part of the column and the second part of the column do not lie flush against each other; when the second part is fixed to or arranged on the first part of the column, there are openings between them, which openings are in fluid communication with the water channel in the second part. The water can enter the chamber of the cartridge via those openings.

In a practical embodiment the water feed means of the preparation device comprise a water feed lance that can be brought into engagement with the column, through which feed lance the water can be fed into the channel and via the one or more nozzles into the chamber containing said ground roasted coffee.

In a preferred embodiment the cartridge has a bottom with one or more openings therein for the passage of the mixture of water and coffee from the chamber. These one or more openings are dimensioned such that no filtering effect is obtained, as it is desired that the coffee grounds are discharged from the cartridge with the water. It is possible that the cartridge comprises one or more integrally formed tubes, each tube extending downward below opening in the bottom of the cartridge. The tubes help to direct the flow of the mixture of water and coffee from the cartridge into the boiling reservoir of the preparation device.

In a preferred embodiment the cartridge comprises a water flow diverter member, which is arranged with respect to the one or more nozzles such that the jet or jets of water emerging from one or more nozzles is diverted so as to cause a swirling motion of the ground roasted coffee when water is fed into the channel. The diverter element could include one or more vanes positioned in the chamber to divert the jet or jets of water, e.g. formed by a diverter member made as a separate part and placed in the chamber (e.g. as an annular member over the column).

In an attractive embodiment a water flow diverter member is formed by a portion of the circumferential wall delimiting the chamber. In a preferred embodiment the circumferential wall has two semi-circular portions and two diverter portions, each interpositioned between said semi-circular portions and each projecting inwardly, the one diverter portion diverting a jet of water into a clockwise swirl and the other diverter portion diverting a jet of water into a counter-clockwise swirl.

In a preferred embodiment the cartridge has a bottom and a bottom sealing film which is placed along the underside of the bottom to cover one or more discharge openings in the bottom. The sealing film could be removed by the user prior to placement in the preparation device, or the device could be provided with means to break said film and create an outlet for discharge of mixture from the cartridge, e.g. a mobile cutter member.

In an embodiment the device is provided with a piercing member, e.g. a mobile piercing member, in order to create one or more outlets for the mixture. Possibly the piercing member is a hollow piercing member, the mixture flowing through said piercing member.

In an embodiment it is envisaged that the cartridge has a piercing member that is operated under the influence of water pressure in the cartridge, allowing to create one or more outlet openings in the cartridge. For example, if the cartridge comprises one or more downwardly extending tubes below the opening or openings in the bottom through which the mixture of coffee and water leaves the cartridge, the tube or tubes can act as a piercing member to break the bottom sealing film. If the cartridge comprises two or more of those tubes, then it is advantageous to retain the bottom film between the tubes when piercing take place, e.g. by providing a ridge in the holder of the preparation device that engages the bottom film in this area between the tubes. That way, each tube pierces an individual hole in the bottom seal, therewith providing a controlled discharge of the mixture of coffee and water from the chamber of the cartridge into the boiling reservoir of the preparation device.

In an embodiment the cartridge has a valved outlet, that is opened to allow for discharge of the mixture, e.g. through pressurization by internal water pressure in the cartridge or by external actuation of the valve. This embodiment is less preferred than non-valved dispensing openings or outlets.

In a preferred embodiment the cartridge has a column that is raised from a bottom of the cartridge and engageable by a water feed lance of the preparation device. A portion of the bottom, preferably annular around the column, is flexible, so that the column is movable upon engagement by the water feed lance. A bottom sealing film underneath the bottom is then breakable by movement of said column and bottom, e.g. by moving the column downwards from a higher initial position to a lower dispensing position.

In a preferred embodiment the cartridge is held by the holder of the preparation device directly above the boiling reservoir. As is preferred the device is then adapted such that said mixture is discharged from said cartridge so as to stream directly, without intermediate duct, from the cartridge into the boiling reservoir. Preferably this arrangement is provided in combination with the cartridge having a column and flexible bottom portion as above.

In a practical embodiment the device is adapted to perform a cleaning process to clean at least the boiling reservoir, preferably said cleaning process comprising the introduction of water, more preferably hot water, into the boiling reservoir, and discharge thereof taking along contaminants of the boiling reservoir.

In an embodiment the preparation device is adapted to receive multiple cartridges simultaneously. Preferably then the preparation device is adapted to prepare multiple servings of the beverage simultaneously.

The present invention also relates to an Arabic coffee preparation device for use with a single serving cartridge having a chamber that contains ground roasted coffee and possibly also contains a sweetener, e.g. sugar,
wherein the preparation device comprises:
- a holder for accommodating the cartridge in the preparation device,
- water feed means adapted to provide water, possibly heated water,
- a boiling reservoir which is arranged to receive therein water and ground roasted coffee that has been discharged from the cartridge,
wherein the preparation device is adapted to subject the water and the ground roasted coffee in the boiling reservoir to a boiling process, wherein it is brought to a boiling or near-boiling temperature,
and wherein the device is further adapted to discharge boiled mixture from said boiling reservoir, e.g. into a cup.

The device is characterized in that the water feed means is adapted to introduce the water into the chamber of the cartridge containing the ground roasted coffee, wherein the cartridge is embodied such that the ground roasted coffee therein is entrained with the water that is introduced into the cartridge and is dispensed as a mixture with said water from the cartridge via one or more outlets, and in that the boiling reservoir is arranged to receive said mixture from the cartridge, and in that the boiling reservoir is provided with a heater which is adapted to heat the mixture in the boiling reservoir so as to subject the mixture to the boiling process.

The present disclosure also relates to a disposable single serving cartridge and the use thereof for preparation of an Arabic coffee beverage, said cartridge having a chamber that contains ground roasted coffee and possibly also contains a sweetener, e.g. sugar,
wherein the cartridge is embodied such that the ground roasted coffee therein is entrained with water that is introduced into the cartridge and is dispensed as a mixture with said water from the cartridge via one or more outlets.

In a possible embodiment, the preparation device is adapted to receive a single cartridge at a time, such that one cup of coffee at a time is prepared. Alternatively, the preparation device could be adapted to receive two or more cartridges at the same time, allowing two or more cups of coffee to be prepared at the same time, or allowing a "double" cup of coffee to be prepared in one go.

In a possible embodiment, the preparation device may have a compartment for receiving used cartridges.

In a possible embodiment, the preparation device may have a compartment for unused cartridges, that supplies a cartridge to the cartridge chamber prior to the preparation of the coffee beverage.

In a preferred embodiment the cartridge is embodied such that a swirling motion of the ground roasted coffee in the chamber is caused when water is introduced into the cartridge. In a further preferred embodiment the cartridge has an inlet for water and one or more nozzles each directing a jet of water into the chamber so as to cause said swirling motion, preferably the cartridge having multiple, e.g. two, nozzles causing simultaneously a clockwise as well as a counter-clockwise swirl in the cartridge.

In a practical embodiment the cartridge has a bottom and a circumferential wall delimiting the chamber, in which the body furthermore has a column which is connected to a portion of the bottom which is preferably situated centrally, which column projects upwards from the bottom to an upper side of the column, through which column a channel extends from an inlet on the upper side of the column to one or more nozzles in the column.

Preferably a water feed lance can be brought into engagement with the column, through which feed lance the water can be fed into the channel and via the one or more nozzle openings into the chamber containing said ground roasted coffee.

As preferred the bottom has one or more discharge openings therein for the unfiltered passage of the mixture of water and coffee from the chamber. These one or more openings can be covered by a film that is to be removed, broken or pierced for discharge of the mixture from the cartridge.

In a preferred embodiment the cartridge comprises a water flow diverter member, which is arranged with respect to one or more nozzles of the cartridge such that the jet or jets of water emerging from one or more nozzles is/are diverted so as to cause a swirling motion of the ground roasted coffee when water is fed into the channel.

In a further preferred embodiment the water flow diverter member is formed by a portion of the circumferential wall. In a preferred embodiment the cartridge is embodied as a cupshaped body with a bottom and a circumferential wall having two semi-circular portions and two diverter portions, each interpositioned between said semi-circular portions and each projecting inwardly, the one diverter portion diverting a jet of water into a clockwise swirl and the other diverter portion diverting a jet of water into a counter-clockwise swirl.

In a practical embodiment the cartridge has a bottom sealing film, which is placed along the underside of the bottom to cover the one or more discharge openings for discharge of mixture, which openings are present in the bottom.

It is preferred that the cartridge has an impervious body, e.g. of suitable plastic material.

It is preferred that the cartridge is formed with a monolithic injection moulded body forming the chamber of the cartridge.

The cartridge may be manufactured with one or more water inlets and/or one or more outlets, possibly said one or more inlets and/or outlets being sealed by a seal (e.g. a film) or a valve.

The cartridge may also be manufactured with no water inlets and/or no outlets, these one or more openings being formed at the moment of use of the cartridge, e.g. by a piercing member on a preparation device into which the cartridge is introduced, or by water pressure within the cartridge, etc.

In a preferred embodiment the body of the cartridge is basically formed as a cup and has a bottom and a circumferential wall delimiting the chamber, in which the body furthermore has a column which is connected to a portion of the bottom which is preferably situated centrally, which column has a portion that projects upwards from the bottom to an upper side of the column, through which column a channel extends from an inlet on the upper side of the column to one or more nozzles in the column. A cover extends over the top opening of the cup shaped body, preferably a film, e.g. heat sealed to the circumferential wall.

In a preferred embodiment the cartridge comprises a column, e.g. with a channel and one or more nozzles, which column is raised from the bottom, wherein a portion of the bottom of the cartridge is flexible, such that the column is movable, preferably elastically movable, downwards and back up again if desired. In an embodiment a water feed lance can be brought into engagement with the top of column, with the result that the column moves from an initial position situated higher up to a dispensing position situated lower down. This may e.g. facilitate the outflow of mixture from the cartridge and/or the removal/opening/rupturing of a bottom seal (when present) extending across one or more outlet apertures arranged in the bottom of the cartridge.

In an embodiment it is envisaged that the one or more nozzles discussed above as being present in the cartridge, e.g. in a column thereof, are formed in a water injection lance of the preparation device, which lance is introduced into the cartridge, e.g. penetrating through a portion of the cartridge, e.g. a top sealing film. It will appreciated that it is then advantageous to provide for one or more water flow diverter members in the cartridge to cause or enhance a swirling motion - upon suitable flow rate of the water - in the cartridge.

The flow diverter member may be embodied as a turbine wheel that is held non-rotary in the cartridge and has multiple vanes, the jets of water emerging from multiple nozzles hitting the vanes and being redirected so as to cause a swirling motion of the water in the cartridge (preferably having a cylindrical circumferential wall), said swirling motion - upon suitable strength of the jets - causing the entraining of the ground roasted coffee in order to create and discharge the mixture from the cartridge.

It is possible that with a cartridge having a bottom with one or more discharge openings therein, that a flow diverter member is arranged near the bottom, with the majority or all of the ground roasted coffee above the diverter member, preferably said one or more nozzles cooperating with the flow diverter member being arranged near the bottom of the cartridge as well, e.g. the cartridge having a conduit, e.g. a column raised from the bottom, extending to the top of the cartridge for the passage of water from an inlet at the top of the cartridge to the one or more nozzles near the bottom of the cartridge.

In another embodiment a water flow diverter member is absent, and one or more nozzles are provided - preferably integrated in the cartridge, yet possibly being integrated in a water feed lance of a preparation device. Each of these nozzles emits a jet water into the chamber with ground roasted coffee upon suitable water feed, these nozzles being oriented such that the swirling of water and ground roasted coffee is effected, e.g. one or more nozzles being oriented to emit jet in a tangential direction within the chamber, preferably the chamber having a circular cross-section.

In a possible embodiment the cartridge, or a water feed lance to be introduced into the cartridge, has one or more first nozzles directing water into the chamber with ground coffee during the first phase, so as to cause a wetting of the ground roasted coffee, and one or more second nozzles, distinct from the first nozzles, said one or more second nozzles directing jets of water into the chamber with ground roasted coffee during the second phase so as to cause that the ground coffee is entrained with the water.

It is noted that the water feed means may be adapted to provide a substantially constant flow rate during the introduction of water into the cartridge, or e.g. several distinct flow rates, e.g. a low flow rate at the start, followed by a greater flow rate.

Further embodiments and preferred and optional details of the invention are disclosed in the appended claims and the description of the drawings.

In the drawings:
Fig. 1 shows an example of a preparation device and of a disposable cartridge of a system according to the invention,
Fig. 2 shows in a perspective view from above the body of the cartridge of figure 1,
Fig. 3 shows in a perspective view from below the body of the cartridge of figure 1,
Fig. 4 shows schematically, in a top view, the swirl pattern when water is introduced into the cartridge of figures 1 - 3,
Fig. 5 shows in cross-section the cartridge of figures 1 - 4,
Fig. 6 shows in cross-section in a different vertical plane the cartridge of figures 1 - 5,
Fig. 7 illustrates schematically the water feed lance of the preparation device engaging with the column of the cartridge of figures 1 - 6 in the course of the Arabic coffee preparation process,
Figs. 8a -d show an alternative embodiment of a preparation device and the removable unit thereof,
Fig. 9 shows an alternative embodiment of a cartridge,
Fig. 10 shows a detail of the cartridge of fig. 9, with a 90° part cut out,
Fig. 11 shows the cartridge of fig. 9 in cross section,
Fig. 12 shows a further example of a cartridge,
Fig. 13 shows the cartridge of figure 12 in side view,
Fig. 14 shows the cartridge of figure 12 from below,
Fig. 15 shows a cross-section of the cartridge along the line A-A in figure 13,
Fig. 16 and 17 show the water flow diverter member of the cartridge of figures 12 - 15.

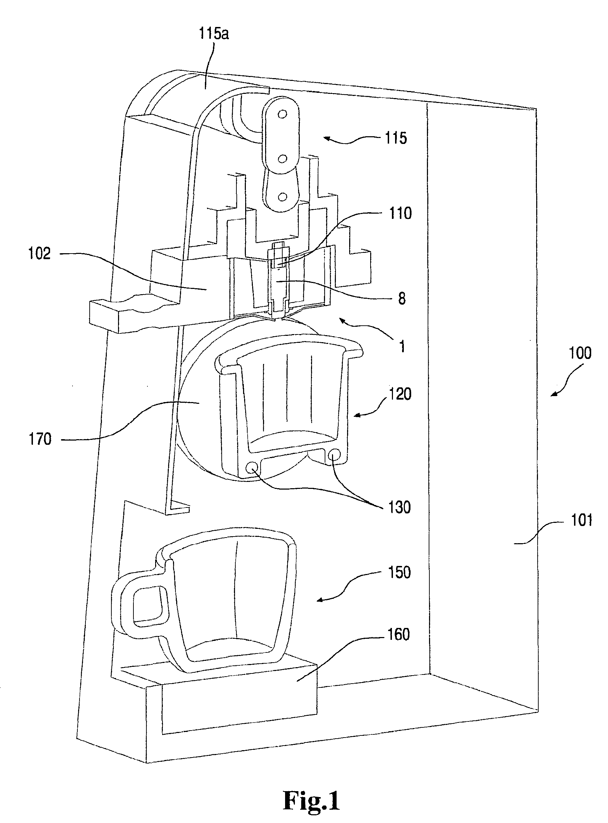

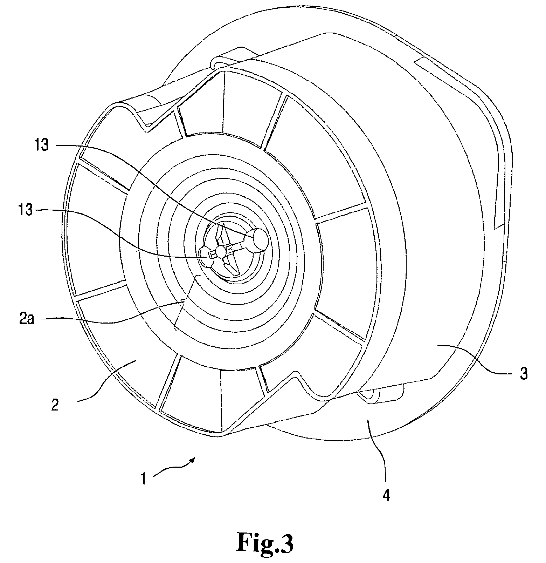

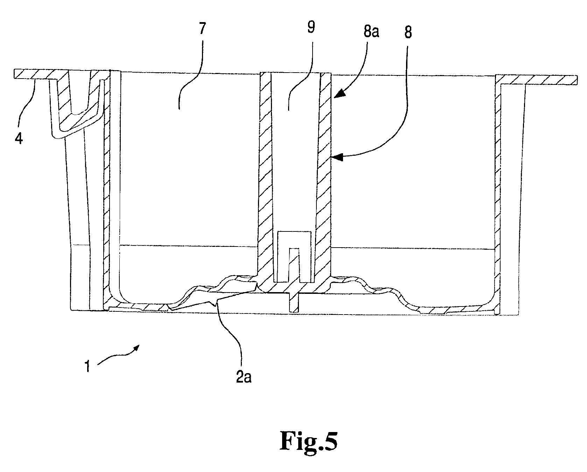

With reference to figures 1 - 7 a first example of a system for the preparation of a single serving of an Arabic coffee beverage will be explained.

The system generally includes a disposable single serving cartridge 1 and a coffee preparation device 100.

The cartridge 1 has a chamber that contains ground roasted coffee (not shown) and possibly also contains a sweetener, e.g. sugar.

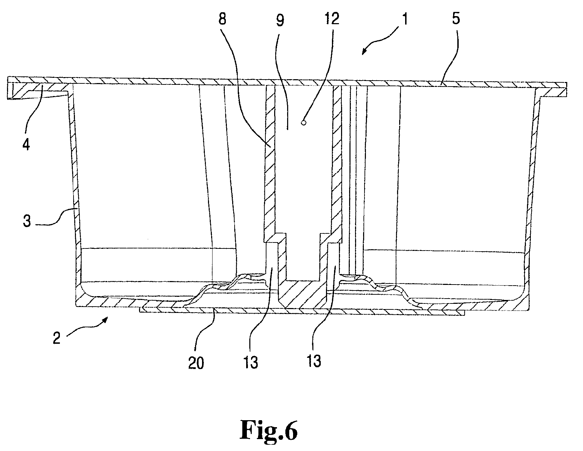

The cartridge 1 here - as is preferred- has an injection monolithic moulded plastic body with a bottom 2 and a circumferential wall 3, an upper edge 4 (here formed as a flange) of the circumferential wall 3 bounding an aperture which is hermetically sealed by a top sealing film 5 (see figure 6) fixed on its circumference to the upper edge.

The plastic body - as is preferred - has a central column 8 which is at its lower end integral with the centre of the bottom 2, which column 8 projects upwards from the bottom to an upper end 8a of the column, the chamber 7 surrounding said column 8.

A channel 9 extends in the column 8 from an inlet 9a at the upper end of the column to a blind end, preferably near the bottom 2.

The top sealing film 5 is breakable, preferably pierceable, so that a water feed lance 110 can be passed through the top sealing film 5, be engaged with the upper end of column 8, and introduce water into the channel 9.

As is preferred, the column 8 is provided with one or more nozzles 12 that are in communication with the channel 9 in the column 8, and are dimensioned and oriented to each emit a jet of water into the chamber 7. In a practical embodiment each nozzle is formed as a small diameter hole in the wall of the column 8, e.g. with a diameter between 0.3 and 1.0 millimetre.

As is preferred the nozzles 12 are arranged at an elevated position along the height of the column, so closer to the top end than to the bottom end of the column.

As is preferred, two nozzles 12 are provided at diametrically opposed positions.

Each nozzle 12, as is preferred, emits a jet in substantially radial direction away from the column 8.

As is preferred, the bottom 2 is embodied as a closed bottom with a number of discharge openings 13 being present therein for the water and the ground roasted coffee entrained by said water. As is preferred the one or more discharge openings are arranged in the bottom adjacent the column 8, here, as an optional feature, the column having recessed regions to form discharge openings close to the centre of the cartridge.

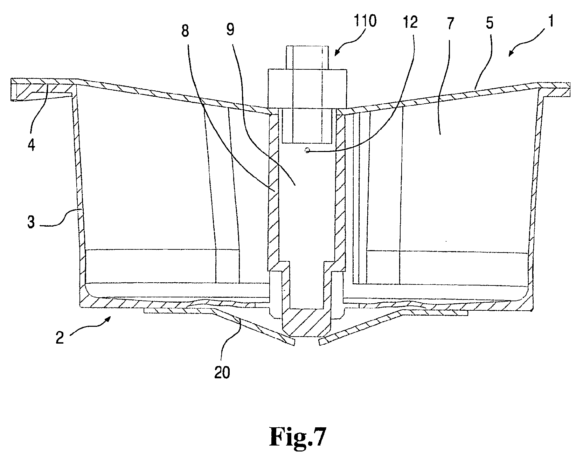

As is preferred, the bottom 2 has an annular flexible portion 2a around the column 8 such that the column is movable, preferably elastically movable, downwards from an initial position (see e.g. figure 6) to a lower operative position (see figure 7) through engagement with feed lance 110 and suitable relative displacement of the feed lance and the cartridge 1.

As is preferred, in the initial position, the upper end of the column 8 extends up to the top sealing film 5.

As is preferred, the cartridge is provided with a bottom sealing film 20 that is fixed at is circumference to the plastic body and extends underneath the bottom, at least covering the one or more discharge openings 13. The bottom sealing film 20 is adapted to break upon relative motion of the column 8 and of the bottom to the lower operative position, said breakage creating one or more outlets in the bottom sealing film allowing for outflow of the obtained mixture from the cartridge.

To enhance breakage of the film 20, as is preferred, the bottom is provide with an integrally moulded cutter member 18, here in the region below the column, here embodied as two intersecting cutting blade portions.

The cartridge 1 is, as is preferred, embodied such that a swirling motion of the ground roasted coffee in the chamber 7 is caused when water is introduced into the cartridge.

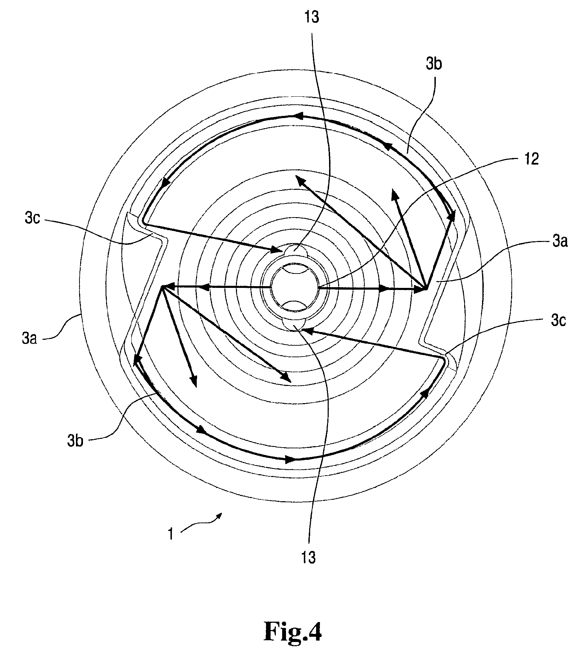

In this example the nozzles 12 each direct a jet of water into the chamber 7 so as to cause said swirling motion. As even more preferred, the nozzles 12 cause the simultaneous occurrence of a clock-wise as well as a counter-clockwise swirl in the cartridge as illustrated in figure 4. As is most preferred these swirls having different direction also collide with one another in the chamber, thereby creating a very turbulent flow of water and entrained ground coffee in the chamber. The mixture thus obtained, flows out unfiltered via the one or more discharge openings 13.

As is preferred, the cartridge 1 comprises one or more water flow diverter members, which are each arranged with respect to the one or more nozzles 12 such that the jet or jets of water emerging from one or more nozzles 12 is diverted so as to cause or enhance the swirling motion of the ground roasted coffee when water is fed into the channel 9.

In this example, as is preferred, a water flow diverter member is formed by a portion 3a of the circumferential wall 3. In this example the circumferential wall 3 has two semi-circular portions 3b and two diverter portions 3a. Each portion 3a is positioned between the semi-circular portions 3b. The portion 3a projects inwardly with respect to the imaginary circumscribing circle of the portions 3a; one end adjoining the semi-circular portion 3b and the other end being inwardly offset from the neighbouring end of the other semi-circular portion 3a. A transition portion 3c of the circumferential wall interconnects the latter mentioned ends, and also forms with the adjoining semi-circular portion 3b a further diverter for the flow of water and entrained ground coffee, generally towards the column and then in the direction of the diverter portion 3a where the flow originated from (see figure 4).

For example each portion 3a is substantially planar. The portion 3a shaped and aligned with respect to the associated nozzle 12 such that the jet of water emitted from said nozzle 12 is generally diverted as a whole towards the directly adjoining portion 3b.

As can be seen, the one diverter portion diverts a jet of water into a clockwise swirl and the other diverter portion divers a jet of water into a counter-clockwise swirl.

The preparation device 100 comprises a housing 101 and a holder 102, here embodied as a drawer type holder, for accommodating the cartridge 1 in the preparation device.

The device 100 further comprises water feed means adapted to provide water, possibly heated water, yet preferably cold, non-heated water. Of these means a water feed lance 110, and - as is preferred - an associated displacement means 115 are shown. The water feed means may further include a pump, e.g. an electric pump, to supply water to the lance 110. The water feed means may also include a water heating assembly for heating the water prior to introduction into the cartridge 1, e.g. an electric heating assembly (e.g. a boiler or a flow-through heater) for supplying hot, not boiling water, preferably hotter than 70°C.

As is preferred, the displacement means 115 are in this example manually operable by the user of the device. Here the means 115 include a pivotal lever 115a, engaging a toggle-lever mechanism to reciprocate the water feed lance 110 between a raised and a lowered position with respect to the holder for the cartridge. This allows to press the lance through the film 5, engage on the column so as to press it downwards, thereby pressing the bottom and the cutter member thereof down, against the film 20 which then ruptures.

It will be appreciated that a motorized drive for the water feed lance 110 is also possible if desired, e.g. with an electric motor drive.

In a practical embodiment the water feed means comprise a supply storage tank for storage of a supply of the water, e.g. a reservoir that can be disconnected from the device and be refilled under the tap.

In a practical embodiment the lance 110 and the inlet 9a of the channel 9 of the column 8 are such that a front portion of the lance projects into the inlet of the channel.

The device comprises a boiling reservoir 120 which is arranged to receive therein the mixture of water and ground roasted coffee that has been discharged from the cartridge 1.

In general the preparation device is adapted to subject the water and the ground roasted coffee held in the boiling reservoir to a boiling process, wherein it is brought to a boiling or near-boiling temperature. The device is further adapted to discharge boiled mixture from said boiling reservoir, e.g. into a drinking cup 150 that has been placed by the user on a cup support 160 of the device.

As explained with reference to the exemplary cartridge 1 the water feed means and the cartridge are adapted to introduce the water into the chamber 7 of the cartridge 1 containing the ground roasted coffee. The cartridge 1 is embodied such that the ground roasted coffee therein is entrained with the water that is introduced into the cartridge and is dispensed as a mixture with said water from the cartridge via one or more outlets 13 and the broken film 20.

The boiling reservoir 120 is arranged in the housing of the device 100 to receive said mixture from the cartridge 1.

As is preferred, here, no duct is present to receive the mixture from the cartridge and guide it to the reservoir 120. Here the stream emanating from the cartridge is directly received in the reservoir positioned below the cartridge, without contact between said flow and other parts of the device.

The boiling reservoir 120 is provided with a heater 130, here an electric heater, which is adapted to heat the mixture in the boiling reservoir so as to subject the mixture to the boiling process.

It is envisaged that the boiling process for preparation of an Arabic coffee product may, or preferably does, entail the formation of a foamy head on the mixture in the receptacle as a result of the boiling.

The duration and/or performance (e.g. heat input into the mixture) of the boiling process can be controlled in various manners, e.g. using a sensor (e.g. an infrared sensor) detecting the formation of the foamy head and using said detection as a control parameter for the heater 130. Other approaches, e.g. using a timer to control the duration and/or temperature sensor, can also be employed.

If desired the device may comprises one or more user-operable setting means allowing the user to adjust one or more predetermined setting of the device, e.g. volume of water for preparation of a single serving, one or more aspects of the boiling process, etc.

As can be seen, in this embodiment, the boiling reservoir is an open topped receptacle 120, e.g. of metal, preferably coated with a non-stick coating on faces contacted by the coffee product.

As is preferred, the receptacle 120 is movably supported in the device so as to be movable between a receiving position (see figure 1), wherein the mixture is received from the cartridge 1, and a dispensing position, wherein boiled mixture is dispensed from the boiling reservoir.

Here, as is preferred, the receptacle is tiltable about a horizontal axis in order to pour the boiled mixture from the receptacle into the cup positioned below. As is preferred the motion of the receptacle is performed by a motorized drive 170, here performing tilting about a horizontal axis, e.g. with an electric motor, preferably the pouring motion being performed on the basis of a suitable control signal issued by an electronic controller of the preparation device.

As is preferred, the wall of the receptacle 120 is heated by the heater 130, the mixture being heated by contact with said heated wall.

The pouring motion of the receptacle 120 is preferably performed such that all coffee grounds are entrained with the mixture that is poured into the cup.

If desired the device can be adapted to perform a cleaning process to clean at least the boiling reservoir 120. Possibly said cleaning process comprises the introduction of clean water, more preferably hot water, into the boiling reservoir 120 (e.g. directly from the lance 110), and discharge thereof (e.g. by pouring into a cup arranged to receive said water) taking along contaminants from the boiling reservoir.

It will be appreciated that instead of a mobile arranged receptacle that is mobile to perform a pouring motion, the receptacle or other type of boiling reservoir could also be mounted stationary in the device; a valved outlet being provided for controlled discharged of boiled mixture into the cup.

In another practical embodiment (not shown here) the device is embodied such that the lance 110 is mounted stationary in the device, and the displacement means are equipped to move a holder supporting the cartridge towards the lance and away from it, in such a way that in the process the lance connects to the channel 9.

In another practical embodiment the device may comprise a means to add a sweetener to the mixture in the boiling reservoir, e.g. from a storage compartment in the device, e.g. with a controlled feed mechanism (e.g. an auger) for the sweetener (e.g. sugar). The sweetener could also be packaged in a disposable container, e.g. as a liquid sweetener in a collapsible pouch.

In a practical embodiment the receptacle 120 can be readily removed from and placed back into the device, e.g. for thorough cleaning.

It will be appreciated that a device may comprises multiple stations for preparation of an Arabic coffee product, e.g. allowing to increase the speed of preparation of multiple cups of coffee, e.g. in a restaurant, bar, etc.

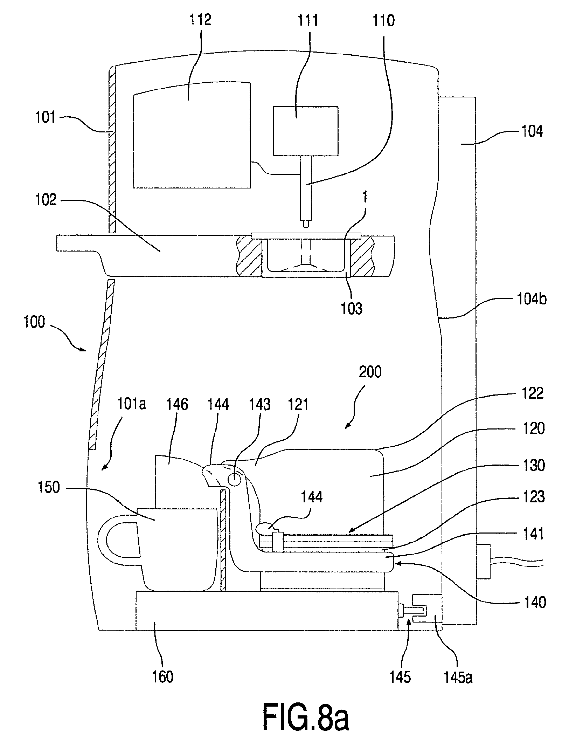

With reference to figures 8a-d, wherein an alternative embodiment of the preparation device 100 is shown, further optional and/or preferred features of the invention will be discussed.

In figures 8a-d the preparation device 100 includes a main housing 104 and a removable boiling reservoir unit 200 that is user removable from the main housing, e.g. for cleaning the boiling reservoir 120.

In this example the unit 200 is removable at the front of the device 100, which front has an opening 101a to allow the unit to be pulled from the main housing and be slided back into the main housing.

The removable unit 200 comprising a base 160, the boiling reservoir 120, and an electric heater 130 (integrated here in the bottom of the reservoir 120) for heating the boiling reservoir.

The boiling reservoir 120 is movable supported on the base 160. Here - as is preferred - the base is provided with a tiltable carrier mechanism 140 with a carrier 141 to support the boiling reservoir 120 in tiltable manner about an axis 143. The drive for providing the tilting force is in this example mounted on the main housing, schematically indicate at 138, e.g. with an electric tilt drive motor. The mechanism 140 here comprises a tilt drive connector 142 that connects to the drive 138 when the unit 200 is slid into the main housing 104, e.g. into a rotary drive slot that receives the connector 142 therein.

If desired a single drive motor can be employed for motion of the lance 110 and for tilting the reservoir 120.

In the depicted example the boiling reservoir 120 and electric heater 130 are integrated into a subunit that is user detachable from the base, here from the mechanism 140, when the removable unit 200 has been removed from the main housing 104.

In order to provide electricity to the electric heater 130 the base 160 is provided with a first electrical connector part 145, here with four pins, that detachably connects to a corresponding electrical connector part 145a on the main housing when the unit is slid into the main housing 104. The base, here the mechanism 140, is provided with a second electrical connector part 148 that detachably connects to a corresponding electrical connector part on the subunit, here said subunit having four connector pins (not shown).

As depicted the cup 150 into which the drink is to be poured is positioned basically on the base also acting as cup support next to the boiling reservoir 120 in its boiling position.

The boiling reservoir 120 is retained on the carrier 141 by one or more locking members 144 that are user operable to retain and release the reservoir 120.

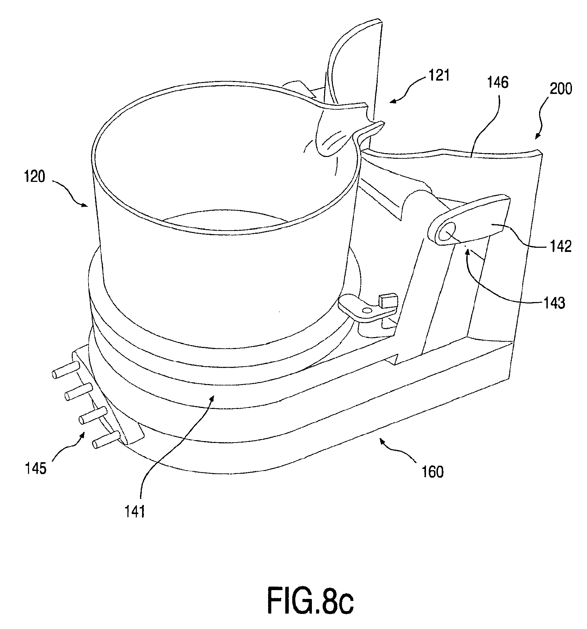

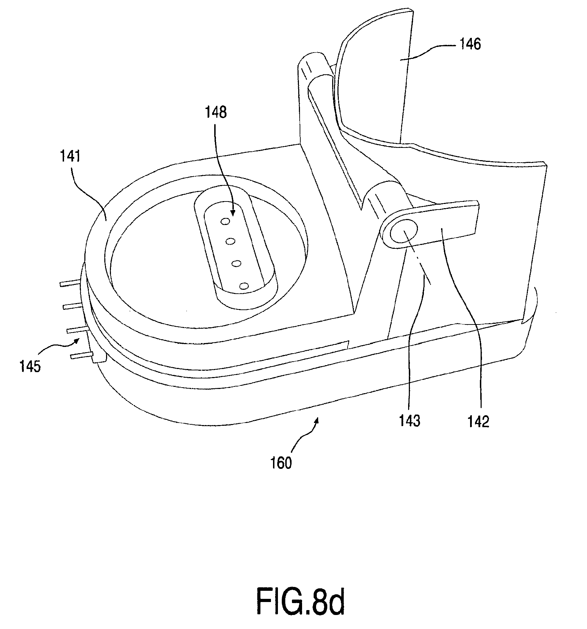

Figures 8a and 8c show one lock 144, the other lock 144 is arranged on the opposite side of the boiling reservoir 120 (in figure 8d the locks are left our for clarity). The locks 144 depicted as example are rotatable around a vertical axis between a retaining position and a release position. In the retaining position, the locks 144 retain the boiling reservoir subunit on the carrier 141. In the release position, the boiling reservoir subunit can be removed, e.g. for cleaning purposes. The locks 144 can be easily operated by the user of the preparation device.

The tilting carrier mechanism further comprises a tilt axis 143. This tilt axis 143 is - as is preferred - arranged such that extends substantially horizontally, here generally between the boiling reservoir 120 and the position for the drinking cup 150.

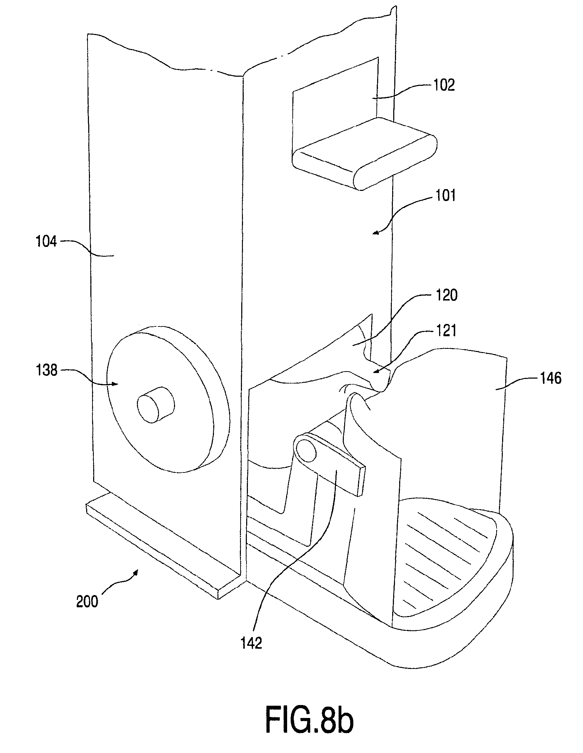

The tilt axis 143 is arranged near the upper part of the boiling reservoir 120. In the example of figures 8 a - d, the boiling 120 reservoir has a pour spout 121 at its upper rim, and the tilt axis 143 is arranged just below the spout 121. The tip of the spout 121 extends over the tilt axis 143.

Figure 8a shows the boiling reservoir 120 in its receiving position, in which it is substantially level. The boiling reservoir assumes this position when the device is idle, when water is introduced in the cartridge 1, when the mixture of water and coffee is received from the cartridge 1 and when the mixture of water and coffee is boiled in the boiling reservoir 120. When the boiling of the mixture is complete, the holder 141 with the boiling reservoir subunit 120 is tilted about tilt axis 143 upward into its dispensing position, and the mixture of water and coffee, including coffee grounds, is poured into a drinking cup 150 that is arranged on the cup support of base 160.

By the arrangement of the tilt axis 143 in close vicinity to the pour spout, as for example shown in fig. 8a, 8b and 8c, any foam or froth that is formed on the mixture of water can coffee is left substantially intact when pouring the mixture of water and coffee into the drinking cup 150.

The tilting mechanism 140 can be actuated in various ways. For example, a lever 142 can be present. The lever 142 could be operated manually, for example by a knob or lever on the outside of the housing of the preparation device. Alternatively, the lever 142 can be operated by an electric motor.

Optionally, a shielding wall 146 is present between the boiling reservoir 120 and the position of the drinking cup 150. In fig. 8a, this shield 146 is shown partly in cross section, because otherwise the drinking cup 150 would not be visible. The shielding wall 146 reduces soiling of the inner parts of the preparation device and can provide a reference for the user where to place the drinking cup 150 on the cup support 160.

The boiling reservoir 120 comprises a wall 122 and a bottom part 123. The wall 122 is for example made of an engineering plastic, while the bottom part 123 is for example made of metal. A heater 130 may be incorporated in the bottom part 123 and/or in the wall 122. The heater here is an electric heater.

As the heater 130 here is incorporated in or integrated with the boiling reservoir 120, it is tilted along with the boiling reservoir 120 when pouring the boiled mixture of water and coffee into the drinking cup 150.

Like the embodiment of fig. 1, the embodiment of fig. 8 comprises a cartridge holder 102, here embodied as a drawer type holder as is preferred.

In the embodiment shown, the cartridge holder 102 comprises a cartridge chamber 103 for receiving the cartridge 1 in the cartridge holder 102. In the embodiment shown in fig. 8, there is only one chamber 103 for receiving a cartridge 1, but in an alternative embodiment there could be two or even more than two cartridge chambers 103 in the holder 102, or there could be multiple holders 102, each having a single cartridge chamber 103.

In case the preparation device 100 comprises more than one cartridge chamber 103, the preparation device preferably also comprises more than one boiling reservoir 102.

The preparation device 100 of fig. 8 comprises a moveable water feed lance 110 for feeding water to the cartridge 1. The water feed lance 110 is actuated by drive 111, which could be operated manually, e.g. in the way shown in fig. 1, or for example by means of an electric motor.

The preparation device 100 of fig. further preferably comprises a water reservoir 112 which is adapted to contain enough water for multiple coffee beverages. Preferably, this water reservoir 112 is connected to the water feed lance 110.

Preferably, the preparation device 100 comprises a separate compartment in the housing 104 for the electronic components, e.g. the pump and the control unit for the heater and one or more electric drive motors. This compartment of the main housing 104 is hermetically separated by a wall 104b from the compartment of the housing where the boiling is performed in order to avoid that the electronics are exposed to any water or vapour that is formed when boiling the mixture of water and coffee in the boiling reservoir 120.

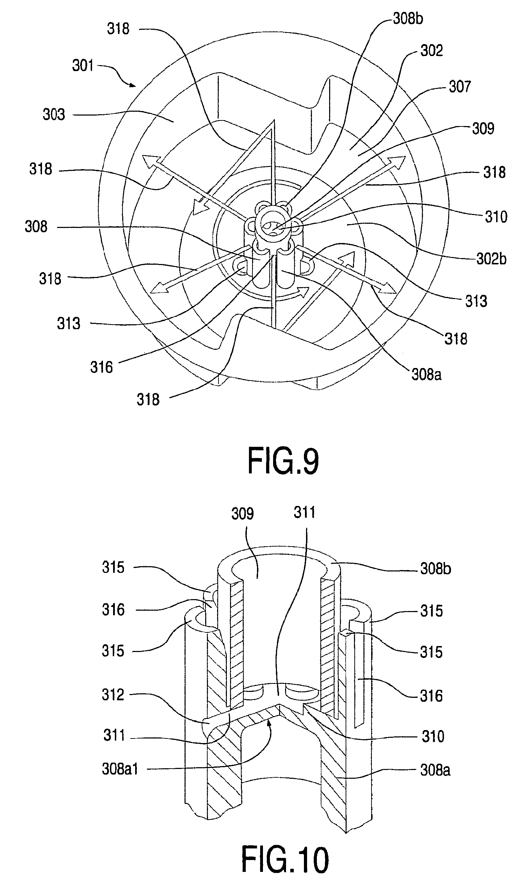

Fig. 9 shows an alternative embodiment of a cartridge 301 according to the disclosure In practice, the cartridge of fig. 9 will have a top seal that covers chamber 307 (which chamber 307 in practice retains the ground coffee). The top seal is not shown in fig. 9 in order to be able to show the interior of the cartridge 301.

The cartridge 301 of fig. 9 comprises a column 308.

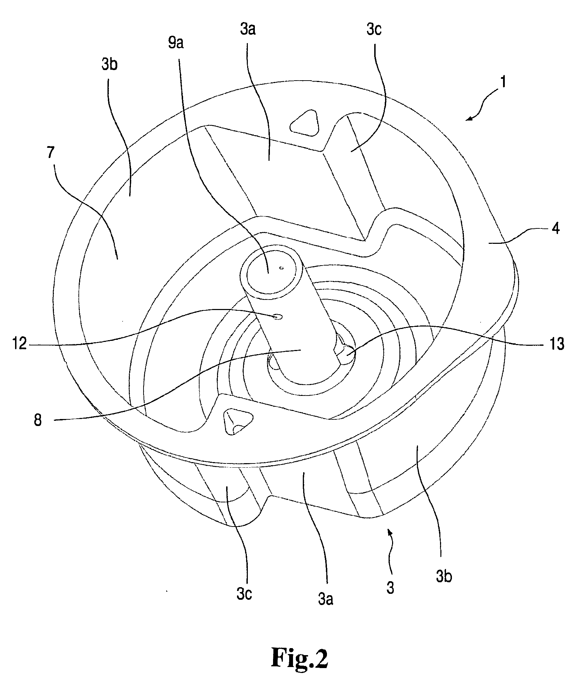

The circumferential wall 303 of the chamber 307 has the same shape as the circumferential wall 3 of the cartridge shown in fig. 2. Like the cartridge of fig. 1, the cartridge of fig. 9 has a bottom 302 with a flexible bottom part 302b around the column 308 such that the column 308 is moveable, preferably elastically moveable, downwards from an initial position to a lower operative position, for example through engagement with a water feed lance 110 and suitable relative displacement of the water feed lance 110 and the cartridge 301.

The cartridge 301 further comprises discharge openings 313. Fig. 9 shows two discharge openings 313, but a different number, e.g. one or four, is also possible. The mixture of water and coffee, including coffee grounds, that is obtained by introducing water into the chamber 307 that accommodates an amount of finely ground roasted coffee is discharged from the chamber 307 via those discharge openings 313.

In the embodiment of fig. 9, the column 308 comprises a first part 308a and a second part 308b.

The first part 308a is connected to the bottom 302 of the cartridge 301. It is preferably integrally moulded with the bottom 302.

The first part 308a comprises a transverse wall 308a1 with a number of raised support bosses 310 extending upwardly from this wall. There are gaps 311 between the supports 310.

The top part of the first part 308a of the column 308 has a crown-like shape, formed by the raised protrusions 315. The protrusions 315 are separated for each other by vertical gaps 316.

In the embodiment shown in the figures 9-11, the top part of the first column part 308a comprises six protrusions 315, but other numbers are possible as well, e.g. two, three, four, five, eight or ten. The number of protrusions 315 can be the same as the number of supports 310, but this is not necessary.

The second part 308b of the column 308 is an annular body, that is arranged on the first part 308a of the column 308 such that it rests on the supports 310. The second part 308b can be integral with the first part 308a of the column 308, but in the example of fig. 9-11, it is a separate part. It can be clamped between the protrusions 315, or loosely fitted between the protrusions 315. The interior space of the annular body forms the channel in the column 308.

The gaps 316 between the protrusions 315 and the gaps 311 between the supports 310 are arranged such that they at least partially overlap. This overlap makes that there is fluid communication between the interior of the second part 308b of the column 308 and the chamber 307. The gaps 311 and the gaps 316 together form the nozzles 312 via which water is introduced into the chamber 307. The water is introduced in the form of jets, as shown by arrows 318 in fig. 9. In the embodiment shown in fig. 9, the relative position of the gaps 311 between the supports 310 and the gaps 316 between the protrusions 315 is such that six nozzles 312 are formed.

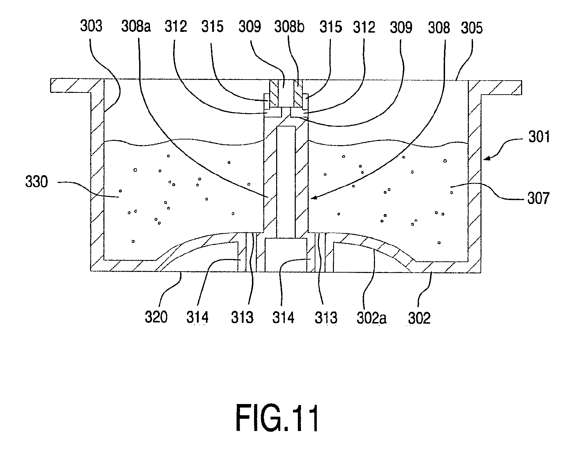

Fig. 11 shows the embodiment of fig. 9 in cross section. In fig. 11, the column 308 is in its initial position. Top seal 305 covers the top of the cartridge 301. A bottom seal 320 is arranged over at least the flexible part 302a of the bottom 302. Ground roasted coffee 330 is present in the chamber 307. Discharge openings 313 are provided with downwardly extending tubes 314 that extend below the bottom of the cartridge, yet above the bottom seal 320.

In use, a water feed lance is brought into engagement with the top of the column 308 of the cartridge 301. The water feed lance pierces the top seal 305 and feeds water into the channel 309 in the second part 308b of the column 308. In a preferred embodiment, the top seal foil 305 is clamped between the water feed lance and the top of the second part 308b of the column 308 so the top of the chamber 307 stays closed.

The water that is introduced into the channel 309 of the second part 308b of the column 308 is guided by the wall 308a1 through the gaps 311 and 316 that together form the nozzles 312.

From the nozzles 312, the water enters the chamber 307 in the form of multiple jets. The jets are deflected by the wall 303 of the chamber 307, preferably in such a way that a swirling motion is obtained which provides good mixing of the water and the ground roasted coffee. The introduction of water into the channel of the second part 308b of the column 308 in order to form water jets from nozzles 312 does not require a high feeding pressure, it can already be obtained at low pressures of about 1.1 to 3 bar.

As the water feed lance pushes the column 308 downward the ends of the tubes 314 that are extend the discharge openings 313 pierce the bottom seal 320. Preferably, the bottom seal 320 is supported from below during this piercing by the holder 102.

As the bottom seal 320 has been pierced, the mixture of water and coffee grounds, is drained from the chamber 307 of the cartridge, into the boiling reservoir 120 of the preparation device 100.

Any of the cartridges according to the disclosure may have provisions that make they only fit into the holder of the preparation device in a defined position. Such provisions can be a notch or a ridge or flap on the outside of the cartridge, corresponding with a ridge or notch in the chamber of the holder for the cartridge in the preparation device, or a general non-circular symmetric shape of the cartridge which a matching shape of the holder.

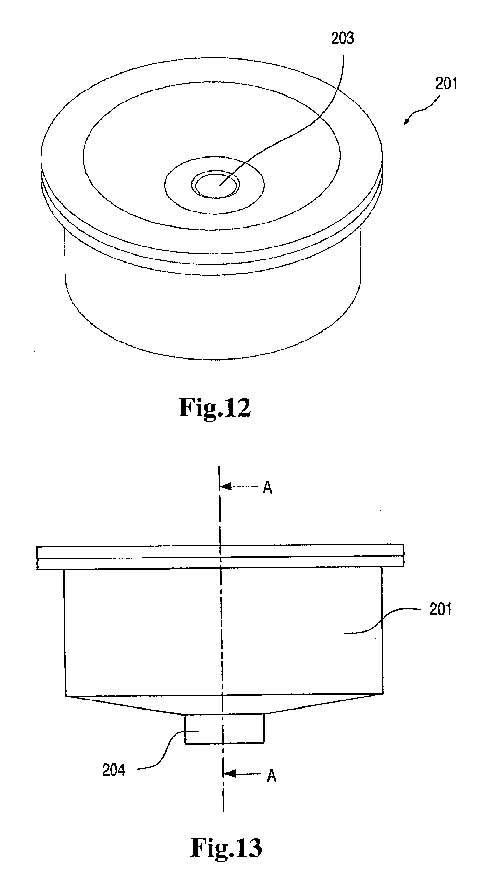

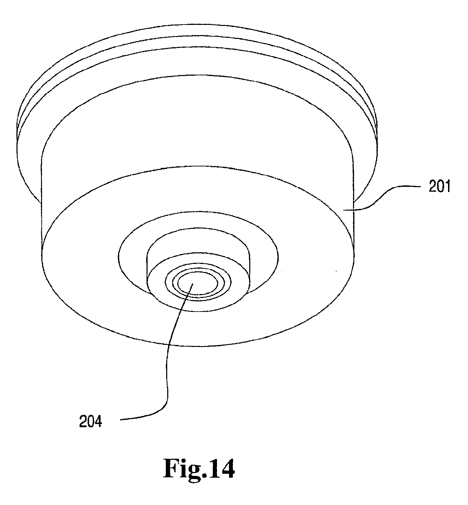

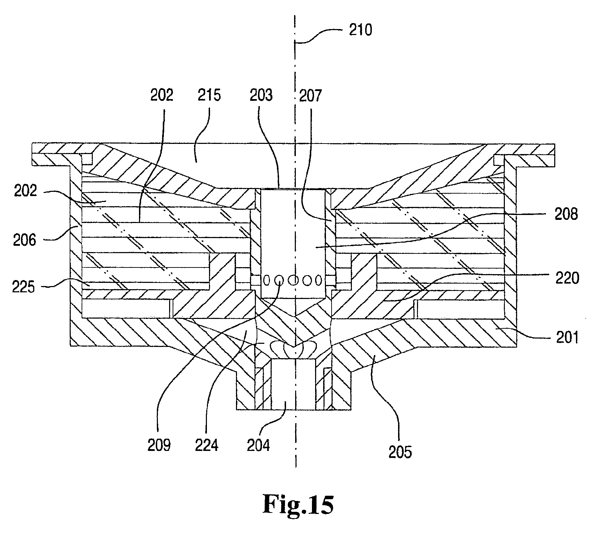

Figures 12 - 17 show another example of a disposable single serving cartridge 201 for the preparation of a Turkish coffee beverage. The cartridge has a chamber 202 containing ground roasted coffee, preferably finely ground as is known for the preparation for Turkish coffee. Also a sweetener, e.g. sugar, may be also held in the cartridge, e.g. distributed in the mass of coffee.

The cartridge 201 allows introduction of hot or (near) boiling water via an inlet 203 formed or to be formed in the cartridge. The cartridge 201 allows discharge via an outlet 204 formed or to be formed in the cartridge.

The cartridge 201 may be supplied with cold, hot or (near) boiling water.

As is preferred the cartridge 201 is embodied to introduce water into the chamber 202 so as to cause a swirling motion of the ground roasted coffee in the chamber 202 and the entraining of the ground roasted coffee with the water, the cartridge 201 having no filter so that the ground roasted coffee is then discharged from the cartridge via outlet 204.

In this example, as is preferred, the cartridge has a cup shaped body with a bottom wall 205 and a circumferential wall 206 delimiting the chamber 202. The body furthermore has a column 207 which is connected to (preferably as a monolithic part) a portion of the bottom wall 205. The column is preferably situated centrally in the chamber 202. Through the column 207 a channel 208 extends from the inlet opening 203 on the upper side of the column 207 to one or more nozzles 209 in the column 207, here near the lower end of the column.

A water feed lance (schematically depicted with reference numeral 210) can be brought into engagement with the top of the column 207, through which feed lance 210 the water can be fed into the channel 8 and via the one or more nozzles 209 into the chamber 202 containing the ground roasted coffee.

The cartridge 201 comprises a water flow diverter member 220, which is arranged in the chamber 202 and with respect to the one or more nozzles 209 such that the water emerging from one or more nozzles 209 is diverted so as to cause a swirling motion of the ground roasted coffee when water is fed at a suitably high flow rate into the channel 208.

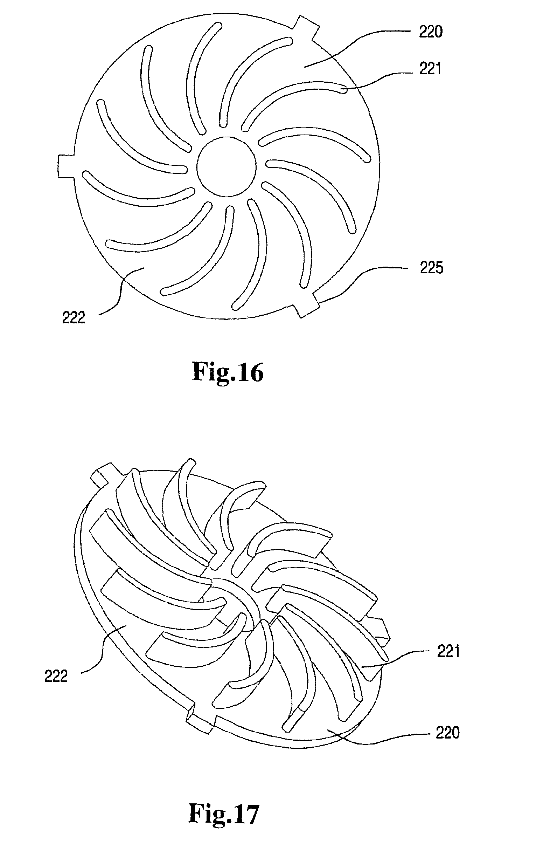

An example of the member 220 is shown in figures 16 and 17 in more detail.

In general the member 220 here is embodied as a water turbine wheel that is held in non rotating manner in the cartridge (of could be formed as an integral part of the body of the cartridge).

The water flow diverter member 220 comprises one or more diverter vanes 221, here curved diverter vanes 221.

In this example the one or more nozzles 209 are oriented to emit a jet of water in a radial direction, and the water flow diverter member 220 diverts the jets of water into a more or even primarily tangential direction.

Here, the water flow diverter member 220 is an annular member with a central hole through which the column 207 projects.

As is shown the flow diverter member 220 can be snap fitted on the column 207.

As is preferred the water flow diverter member is mounted or arranged on the bottom of the cartridge 201 so that all or the majority of the ground coffee is above the member 220, here with the one or more outlets 204 in the bottom of the cartridge as is preferred.

One or more outlet passages 224 are present between the water flow diverter member 220 and the bottom wall of the cartridge so as to lead coffee extract and ground coffee entrained with water to the one or more outlets 204.

Here the bottom 205 has one or more raised supports 205a upon which the water flow diverter member 220 is supported spaced from the bottom surface, so as to form said one or more outlet passages 224 to the one or more outlets 204.

The water flow diverter member2 20 comprises a disc portion 222, one or more apertures 225 being present between the outer circumference of the disc portion 222 and the circumferential wall 6 of the body of the cartridge 201 for the passage of coffee extract and ground roasted coffee, and one or more flow diverting portions 221 on said disc portion 222, e.g. flow diverting vanes.

In a preferred embodiment, as disclosed in referenced WO2007/114685, a portion of the bottom wall 205 is flexible, such that the column 207 is movable, preferably elastically movable, downwards and back up again if desired. This allows to bring the water feed lance 110 into engagement with the column 207, with the result that the column moves from an initial position situated higher up to a dispensing position situated lower down.

The circumferential wall 206 has an upper edge bounding an aperture, which aperture of the filled cartridge 201 is hermetically sealed by a top cover 215, preferably a top sealing film which is fixed on its circumference on the upper edge or a plastic injection moulded cover.

In a possible embodiment the cover extends over the opening in the top end of the column 207, wherein the top cover, preferably the top sealing film, is breakable, preferably pierceable, so that a feed lance 110 can be passed through the sealing film and can then be connected to the inlet of the channel 208 in the column 207, with the result that the water can be fed through the channel 208.

In a possible embodiment the cartridge 201 is provided with a bottom seal which seals the outlet 204 and can be opened or removed at the time of use.

In a possible embodiment the cartridge 201 has a bottom sealing film, which is placed along the bottom of the outlet 204 on the underside of the bottom. Preferably, a portion of the bottom is flexible, so that the column 207 is movable downwards relative to the upper edge of the body, and the bottom sealing film is breakable along the bottom of the outflow aperture by moving the column 207 downwards from a higher initial position to a lower dispensing position.

In a possible embodiment the body of the cartridge is designed such that it forms a supporting surface of the cartridge, which supporting surface lies at a distance below the bottom sealing film, so that the bottom sealing film lies higher up than any bearing surface when the cartridge is placed on it.

## Claims

1. System for the preparation of a single serving of an Arabic coffee beverage, which system comprises:
- a disposable single serving cartridge (1;301) having a chamber that contains ground roasted coffee and possibly also contains a sweetener, e.g. sugar,
- a preparation device (100), the preparation device comprising:
- a holder (102) for accommodating the cartridge in the preparation device,
- water feed means (110) adapted to provide water,
- a boiling reservoir (120) which is arranged to receive therein the water and ground roasted coffee that has been discharged from the cartridge,
wherein the preparation device is adapted to subject the water and the ground roasted coffee held in the boiling reservoir (120) to a boiling process, wherein it is brought to a boiling or near-boiling temperature,
and wherein the device is further adapted to discharge boiled mixture from said boiling reservoir (120), e.g. into a cup (150),
**characterized in that**,
the water feed means (110) and the cartridge (1;301) are adapted to introduce the water into the chamber of the cartridge containing the ground roasted coffee, wherein the cartridge (1) is embodied such that the ground roasted coffee therein is entrained with the water that is introduced into the cartridge and is dispensed as a mixture with said water from the cartridge via one or more outlets (13), wherein the water feed means are preferably adapted to introduced cold, non-heated water into the cartridge,
and wherein the boiling reservoir (120) is arranged to receive said mixture from the cartridge (1),
and wherein said boiling reservoir (120) is provided with a heater (130) which is adapted to heat the mixture in the boiling reservoir so as to subject the mixture to the boiling process.

2. System according to claim 1, wherein the boiling reservoir (120) is a receptacle, preferably an open topped receptacle.

3. System according to claim 1 or 2, wherein the boiling reservoir (120) is movably supported in the device (100), preferably tiltable about an axis (143), so as to be movable between a receiving position, wherein the mixture is received from the cartridge (1;301), and a dispensing position, wherein boiled mixture is dispensed from the boiling reservoir.

4. System according to claim 3, wherein the boiling reservoir (120) is tiltable about a horizontal tilt axis (143) that extends outside the boiling reservoir, preferably the boiling reservoir having a pour spout and the tilt axis (143) extending directly adjacent, preferably underneath, the pour spout.

5. System according to one or more of the claims 1 - 4, wherein the preparation device includes a main housing and a removable unit that is user removable from the main housing, e.g. for cleaning, said removable unit comprising a base, the boiling reservoir, and an electric heater for heating the boiling reservoir, the boiling reservoir being movable supported on the base, preferably the base being provided with a tilting mechanism to support the boiling reservoir in tiltable manner.

6. System according to claim 5, wherein the boiling reservoir and electric heater are integrated into a subunit that is user detachable from the base when the removable unit has been removed from the main housing.

7. System according to claim 5 and 6, wherein the base is provided with a first electrical connector part that detachably connects to a corresponding electrical connector part on the main housing, and wherein the base is provided with a second electrical connector part that detachably connects to a corresponding electrical connector part on the subunit in order to provide electricity to the electric heater.

8. System according to one or more of the preceding claims, wherein the cartridge (1) is embodied such that a swirling motion of the ground roasted coffee in the chamber is caused when water is introduced into the cartridge.

9. System according to claim 8 , wherein the cartridge has an inlet (9a) for water and one or more nozzles (12) in communication with said inlet and each directing a jet of water into the chamber so as to cause said swirling motion, preferably the cartridge having multiple, e.g. two, nozzles (12) causing simultaneously a clock-wise as well as a counter-clockwise swirl in the cartridge.

10. System according to one or more of the preceding claims, wherein the cartridge has a bottom (2) and a circumferential wall (3) delimiting the chamber, in which the body furthermore has a column (8) which is connected to a portion of the bottom which is preferably situated centrally, which column projects upwards from the bottom to an upper side of the column, through which column a channel (9) extends from an inlet (9a) on the upper side of the column to one or more nozzles (12) in the column,
and wherein the water feed means comprise a water feed lance (110) that can be brought into engagement with the column, through which feed lance the water can be fed into the channel (9) and via the one or more nozzles (12) into the chamber containing said ground roasted coffee,
and wherein, preferably, the bottom (2) has one or more openings (13) therein for the passage of the mixture of water and coffee from the chamber.

11. System according to claim 10 , wherein the cartridge (1) comprises a water flow diverter member (3a), which is arranged with respect to the one or more nozzles (12) such that the jet or jets of water emerging from one or more nozzles is diverted so as to cause a swirling motion of the ground roasted coffee when water is fed into the channel (9),
wherein, preferably, said water flow diverter member (3a) is formed by a portion of the circumferential wall, e.g. the circumferential wall having two semi-circular portions (3b) and two diverter portions (3a), each interpositioned between said semi-circular portions and each projecting inwardly, the one diverter portion diverting a jet of water into a clockwise swirl and the other diverter portion diverting a jet of water into a counter-clockwise swirl.

12. A system according to claim 10 or 11, wherein the cartridge (1) has a bottom sealing film (20), which is placed along the underside of the bottom to cover the one or more openings in the bottom,
and wherein, preferably, a portion (2a) of the bottom is flexible, so that the column (8) and bottom portion (2a) is movable upon engagement by the water feed lance (110) on the column, and wherein the bottom sealing film (20) is breakable by movement of said column and bottom portion (2a), e.g. by moving the column downwards from a higher initial position to a lower dispensing position.

13. System according to one or more of the preceding claims, wherein said cartridge is held by the holder (102) of the preparation device directly above the boiling reservoir (120), and wherein the device is adapted such that said mixture is discharged from said cartridge (1) so as to stream directly, without intermediate duct, from the cartridge into the boiling reservoir.

14. Method for preparation of an Arabic coffee beverage, wherein use is made of a system according to one or more of the preceding claims.

15. An Arabic coffee preparation device for use with a single serving cartridge (1;301) having a chamber that contains ground roasted coffee and possibly also contains a sweetener, e.g. sugar,
wherein the preparation device (100) comprises:
- a holder (102) for accommodating the cartridge in the preparation device,
- water feed means (110) adapted to provide water,
- a boiling reservoir (120) which is arranged to receive therein water and ground roasted coffee that has been discharged from the cartridge,
wherein the preparation device (100) is adapted to subject the water and the ground roasted coffee in the boiling reservoir (120) to a boiling process, wherein it is brought to a boiling or near-boiling temperature,
and wherein the device is further adapted to discharge boiled mixture from said boiling reservoir, e.g. into a cup,
**characterized in that**,
the water feed means (110) is adapted to introduce the water into the chamber of the cartridge (1;301) containing the ground roasted coffee, wherein the cartridge is embodied such that the ground roasted coffee therein is entrained with the water that is introduced into the cartridge and is dispensed as a mixture with said water from the cartridge via one or more outlets (13), wherein the water feed means are preferably adapted to introduced cold, non-heated water into the cartridge,
and wherein the boiling reservoir (120) is arranged to receive said mixture from the cartridge,
and wherein said boiling reservoir (120) is provided with a heater (130) which is adapted to heat the mixture in the boiling reservoir so as to subject the mixture to the boiling process.

## Patentansprüche

1. System für die Zubereitung einer Einzelportion eines Getränks arabischen Kaffees, wobei das System umfasst:
- eine wegwerfbare Einzelportion-Kartusche (1; 301) mit einer Kammer, die gemahlenen, gerösteten Kaffee enthält und möglicherweise auch einen Süßstoff, zum Beispiel Zucker, enthält,
- eine Zubereitungseinrichtung (100), wobei die Zubereitungseinrichtung umfasst:
- einen Halter (102) zum Aufnehmen der Kartusche in der Zubereitungseinrichtung,
- eine Wasser-Zuführeinrichtung (110), ausgebildet, um Wasser bereit zu stellen,
- einen Siedebehälter (120), welcher so angeordnet ist, dass dieser darin das Wasser und gemahlenen, gerösteten Kaffee, der aus der Kartusche abgegeben worden ist, aufnehmen kann,
wobei die Zubereitungseinrichtung so ausgebildet ist, dass diese das in dem Siedebehälter (120) gehaltene Wasser und den gemahlenen, gerösteten Kaffee einem Siedeprozess unterzieht, in welchem dieses auf eine Siede-oder Fast-Siede-Temperatur gebracht wird,
und wobei die Einrichtung ferner so ausgebildet ist, dass diese das gesiedete Gemisch aus dem Siedebehälter (120) abgibt, zum Beispiel in eine Tasse (150),
**dadurch gekennzeichnet, dass**
die Wasserzuführeinrichtung (110) und die Kartusche (1; 301) so ausgebildet sind, dass das Wasser in die den gemahlenen, gerösteten Kaffee enthaltende Kammer der Kartusche eingeführt wird, wobei die Kartusche (1) derart ausgebildet ist, dass der darin befindliche gemahlene, geröstete Kaffee mit dem Wasser, das in die Kartusche eingeführt wird, mitgenommen wird und über ein oder mehrere Auslässe (13) als ein Gemisch mit dem Wasser aus der Kartusche ausgegeben wird, wobei die Wasserzuführeinrichtung vorzugsweise so ausgebildet ist, dass diese kaltes, nicht erwärmtes Wasser in die Kartusche einführt,
und wobei der Siedebehälter (120) so angeordnet ist, dass dieser das Gemisch aus der Kartusche (1) aufnimmt,
und wobei der Siedebehälter (120) mit einer Heizeinrichtung (130) versehen ist, welche so ausgebildet ist, dass diese das Gemisch in dem Siedebehälter erwärmt, um so das Gemisch dem Siedeprozess auszusetzen.

2. System nach Anspruch 1, in welchem der Siedebehälter (120) ein Gefäß ist, vorzugsweise ein oben offenes Gefäß.

3. System nach Anspruch 1 oder 2, in welchem der Siedebehälter (120) in der Einrichtung (100) beweglich abgestützt ist, vorzugsweise um eine Achse (143) kippbar ist, um so bewegbar zu sein zwischen einer Aufnahmeposition, in welcher das Gemisch aus der Kartusche (1; 301) aufgenommen wird, und einer Ausgabeposition, in welcher das gesiedete Gemisch aus dem Siedebehälter ausgegeben wird.

4. System nach Anspruch 3, in welchem der Siedebehälter (120) kippbar um eine horizontale Kippachse (143) ist, die sich außerhalb des Siedebehälters erstreckt, wobei der Siedebehälter vorzugsweise eine Ausgusstülle aufweist und sich die Kippachse (143) direkt angrenzend, vorzugsweise unterhalb der Ausgusstülle erstreckt.

5. System nach ein oder mehreren der Ansprüche 1 bis 4, in welchem die Zubereitungseinrichtung umfasst ein Hauptgehäuse und eine entfernbare Einheit, die vom Nutzer aus dem Hauptgehäuse entfernbar ist, zum Beispiel zum Reinigen, wobei die entfernbare Einheit eine Basis, den Siedebehälter und eine elektrische Heizeinrichtung zum Erwärmen des Siedebehälters umfasst, wobei der Siedebehälter auf der Basis beweglich abgestützt ist, wobei vorzugsweise die Basis mit einem Kippmechanismus versehen ist, um den Siedebehälter in kippfähiger Weise zu tragen.

6. System nach Anspruch 5, in welchen der Siedebehälter und die elektrische Heizeinrichtung in einer Untereinheit integriert sind, die vom Benutzer von der Basis abnehmbar ist, wenn die entfernbare Einheit aus dem Hauptgehäuse entfernt worden ist.

7. System nach Anspruch 5 und 6, in welchem die Basis mit einem ersten elektrischen Anschlussteil versehen ist, das abnehmbar mit einem korrespondierenden elektrischen Anschlussteil am Hauptgehäuse verbunden ist, und wobei die Basis mit einem zweiten elektrischen Anschlussteil versehen ist, das abnehmbar mit einem korrespondierenden elektrischen Anschlussteil auf der Untereinheit verbunden ist, um die elektrische Heizeinrichtung mit elektrischer Energie zu versorgen.

8. System nach ein oder mehreren der vorhergehenden Ansprüche, in welchem die Kartusche (1) derart ausgebildet ist, dass eine Wirbelbewegung des gemahlenen, gerösteten Kaffees in der Kammer verursacht wird, wenn Wasser in die Kartusche eingeführt wird.

9. System nach Anspruch 8, in welchem die Kartusche einen Einlass (9a) für Wasser und ein oder mehrere Düsen (12) hat, die mit dem Einlass kommunizieren und jeweils einen Wasserstrahl in die Kammer lenken, um so die Wirbelbewegung zu verursachen, wobei die Kartusche vorzugsweise mehrere Düsen (12) hat, z.B. zwei, die in der Kartusche gleichzeitig einen Wirbel im Uhrzeigersinn sowie gegen den Uhrzeigersinn erzeugen.

10. System nach ein oder mehreren der vorhergehenden Ansprüche, in welchem die Kartusche einen Boden (2) und eine Umfangswand (3) hat, welche die Kammer begrenzen, in welchem das Gehäuse ferner eine Säule (8) hat, welche mit einem Bereich des Bodens verbunden ist, der vorzugsweise zentral liegt, wobei die Säule von dem Boden nach oben zu einer oberen Seite der Säule vorsteht, wobei sich ein Kanal (9) durch diese Säule (8) hindurch, von einem Einlass (9a) auf der oberen Seite der Säule zu ein oder mehrere Düsen (12) in der Säule, erstreckt,
und wobei die Wasserzuführeinrichtung eine Wasserzuführlanze (110) umfasst, die in Eingriff mit der Säule gebracht werden kann, wobei durch diese Zuführlanze das Wasser in den Kanal (9) und über die ein oder mehreren Düsen (12) in die den gemahlenen, gerösteten Kaffee enthaltende Kammer geführt werden kann,
und wobei der Boden (2) vorzugsweise ein oder mehrere Öffnungen (13) für den Durchgang des Gemisches aus Wasser und Kaffee aus der Kammer hat.

11. System nach Anspruch 10, in welchem die Kartusche (1) ein Wasserfluss-Umlenkteil (3a) umfasst, welches in Bezug zu den ein oder mehreren Düsen (12) derart angeordnet ist, dass der oder die aus ein oder mehreren Düsen austretende(n) Wasserstrahl(e) umgelenkt wird (werden), um so eine Wirbelbewegung des gemahlenen gerösteten Kaffees zu verursachen, wenn Wasser in den Kanal (9) geführt wird,
wobei das Wasserfluss-Umlenkteil (3a) vorzugsweise durch einen Bereich der Umfangswand gebildet wird, wobei die Umfangswand zum Beispiel zwei halbkreisförmige Bereiche (3b) und zwei Umlenkbereiche (3a) hat, die jeweils zwischen den halbkreisförmigen Bereichen angeordnet sind und jeweils nach innen vorstehen, wobei der eine Umlenkbereich einen Wasserstrahl in einen Wirbel im Uhrzeigersinn umlenkt und der andere Umlenkbereich einen Wasserstrahl in einen Wirbel gegen den Uhrzeigersinn umlenkt.

12. System nach Anspruch 10 oder 11, in welchem die Kartusche (1) eine Boden-Abdichtfolie (20) hat, welche entlang der Unterseite des Bodens angeordnet ist, um die ein oder mehreren Öffnungen im Boden abzudecken,
und wobei vorzugsweise eine Bereich (2a) des Bodens flexibel ist, so dass die Säule (8) und der Bodenbereich (2a) bei Eingriff der Wasserzuführlanze (110) in die Säule beweglich ist und wobei der Boden-Abdichtfilm (20) durch Bewegung der Säule und des Bodenbereichs (2a) brechbar ist, zum Beispiel durch ein Abwärtsbewegen der Säule aus einer höheren Anfangsposition in eine untere Ausgabeposition.

13. System nach ein oder mehreren der vorhergehenden Ansprüche, in welchem die Kartusche durch den Halter (102) der Zubereitungseinrichtung direkt oberhalb des Siedebehälters (120) gehalten wird und in welchem die Einrichtung derart ausgebildet ist, dass das Gemisch aus der Kartusche (1) so ausgegeben wird, dass diese direkt, ohne Zwischenkanal, aus der Kartusche in den Siedebehälter strömen kann.

14. Verfahren zur Zubereitung eines Getränks arabischen Kaffees, in welchem ein System nach ein oder mehreren der vorhergehenden Ansprüche verwendet wird.

15. Zubereitungsvorrichtung für arabischen Kaffee zur Verwendung mit einer Einzelportion-Kartusche (1;301) mit einer Kammer, die gemahlenen, gerösteten Kaffee enthält und möglicherweise auch einen Süßstoff enthält, zum Beispiel Zucker,
wobei die Zubereitungseinrichtung (100) umfasst:
- - einen Halter (102) zum Aufnehmen der Kartusche der Zubereitungseinrichtung,
- - eine Wasser-Zuführeinrichtung (110), ausgebildet, um Wasser bereit zu stellen,
- - einen Siedebehälter (120), welcher so angeordnet ist, dass dieser darin das Wasser und gemahlenen, gerösteten Kaffee, der aus der Kartusche abgegeben worden ist, aufnehmen kann,
wobei die Zubereitungseinrichtung (100) so ausgebildet ist, dass diese das Wasser und den gemahlenen, gerösteten Kaffee (120) einem Siedeprozess aussetzt, wobei dieses auf eine Siede-oder Fast-Siede-Temperatur gebracht wird,
und wobei die Vorrichtung ferner so ausgebildet ist, dass diese ein gesiedetes Gemisch aus dem Siedebehälter ausgibt, zum Beispiel in eine Tasse,
**dadurch gekennzeichnet, dass**
die Wasserzuführeinrichtung (110) so ausgebildet ist, dass diese das Wasser in die den gemahlenen, gerösteten Kaffee enthaltende Kammer der Kartusche (1;301) einführt, wobei die Kartusche derart ausgebildet ist, dass der darin befindliche gemahlene, geröstete Kaffee mit dem Wasser, das in die Kartusche eingeführt wird, mitgenommen wird und über einen oder mehrere Auslässe (13) als ein Gemisch mit dem Wasser aus der Kartusche ausgegeben wird, wobei die Wasserzuführeinrichtung vorzugsweise so ausgebildet ist, dass diese kaltes, nicht erwärmtes Wasser in die Kartusche einführt,
und wobei der Siedebehälter (120) so angeordnet ist, dass dieser das Gemisch aus der Kartusche erhält und wobei der Siedebehälter (120) mit einer Heizeinrichtung (130) versehen ist, welcher so ausgebildet ist, dass diese das Gemisch in dem Siedebehälter erwärmt, um so das Gemisch dem Siedeprozess auszusetzen.

## Revendications

1. Système pour la préparation d'une portion unique d'une boisson à base de café arabica, lequel système comprend:
une cartouche de portion unique jetable (1 ; 301) ayant une chambre qui contient du café torréfié moulu et contient également éventuellement un édulcorant, par exemple du sucre,
un dispositif de préparation (100), le dispositif de préparation comprenant:
un support (102) pour loger la cartouche dans le dispositif de préparation,
des moyens d'alimentation en eau (110) adaptés pour fournir de l'eau,
un réservoir d'ébullition (120) qui est agencé pour recevoir à l'intérieur de ce dernier l'eau et le café torréfié moulu qui a été déchargé de la cartouche,
dans lequel le dispositif de préparation est adapté pour soumettre l'eau et le café torréfié moulu contenu dans le réservoir d'ébullition (120) à un processus d'ébullition, dans lequel il est amené à une température d'ébullition ou proche de l'ébullition,
et dans lequel le dispositif est en outre adapté pour décharger le mélange bouilli à partir dudit réservoir d'ébullition (120), par exemple dans une tasse (150),
**caractérisé en ce que**:
les moyens d'alimentation en eau (110) et la cartouche (1 ; 301) sont adaptés pour introduire l'eau dans la chambre de la cartouche contenant le café torréfié moulu, dans lequel la cartouche (1) est mise en oeuvre de sorte que le café torréfié moulu à l'intérieur de cette dernière est entraîné avec l'eau qui est introduite dans la cartouche et est distribué sous la forme d'un mélange avec ladite eau provenant de la cartouche via une ou plusieurs sorties (13), dans lequel les moyens d'alimentation en eau sont de préférence adaptés pour introduire de l'eau froide non chauffée dans la cartouche,
et dans lequel le réservoir d'ébullition (120) est agencé pour recevoir ledit mélange de la cartouche (1),
et dans lequel ledit réservoir d'ébullition (120) est prévu avec un dispositif de chauffage (130) qui est adapté pour faire chauffer le mélange dans le réservoir d'ébullition afin de soumettre le mélange au processus d'ébullition.

2. Système selon la revendication 1, dans lequel le réservoir d'ébullition (120) est un réceptacle, de préférence un réceptacle à partie supérieure ouverte.

3. Système selon la revendication 1 ou 2, dans lequel le réservoir d'ébullition (120) est supporté de manière mobile dans le dispositif (100), de préférence inclinable autour d'un axe (143), afin d'être mobile entre une position de réception dans laquelle le mélange est reçu de la cartouche (1 ; 301) et une position de distribution dans laquelle le mélange bouilli est distribué à partir du réservoir d'ébullition.

4. Système selon la revendication 3, dans lequel le réservoir d'ébullition (120) peut être incliné autour d'un axe d'inclinaison horizontal (143) qui s'étend à l'extérieur du réservoir d'ébullition, de préférence le réservoir d'ébullition ayant un bec verseur et l'axe d'inclinaison (143) s'étendant directement de manière adjacente, de préférence au-dessous, au bec verseur.

5. Système selon une ou plusieurs des revendications 1 à 4, dans lequel le dispositif de préparation comprend un boîtier principal et une unité amovible qui peut être retirée par un utilisateur du boîtier principal, par exemple pour le nettoyage, ladite unité amovible comprenant une base, le réservoir d'ébullition et un dispositif de chauffage électrique pour chauffer le réservoir d'ébullition, le réservoir d'ébullition étant supporté de manière mobile sur la base, de préférence la base étant prévue avec un mécanisme d'inclinaison afin de supporter le réservoir d'ébullition d'une manière inclinable.

6. Système selon la revendication 5, dans lequel le réservoir d'ébullition et le dispositif de chauffage électrique sont intégrés dans une sous-unité qui peut être détachée par un utilisateur de la base lorsque l'unité amovible a été retirée du boîtier principal.

7. Système selon la revendication 5 et 6, dans lequel la base est prévue avec une première partie de connecteur électrique qui se raccorde de manière détachable à une partie de connecteur électrique correspondante sur le boîtier principal, et dans lequel la base est prévue avec une seconde partie de connecteur électrique qui se raccorde de manière détachable à une partie de connecteur électrique correspondante sur la sous-unité afin de fournir de l'électricité au dispositif de chauffage électrique.

8. Système selon une ou plusieurs des revendications précédentes, dans lequel la cartouche (1) est mise en oeuvre de sorte qu'un mouvement tourbillonnant du café torréfié moulu dans la chambre est provoqué lorsque l'eau est introduite dans la cartouche.

9. Système selon la revendication 8, dans lequel la cartouche a une entrée (9a) pour l'eau et une ou plusieurs buses (12) en communication avec ladite entrée et chacune dirigeant un jet d'eau dans la chambre afin de provoquer ledit mouvement tourbillonnant, de préférence la cartouche ayant plusieurs, par exemple deux, buses (12) provoquant simultanément un tourbillon dans le sens des aiguilles d'une montre ainsi qu'un tourbillon dans le sens inverse des aiguilles d'une montre dans la cartouche.

10. Système selon une ou plusieurs des revendications précédentes, dans lequel la cartouche a un fond (2) et une paroi circonférentielle (3) délimitant la chambre, dans lequel le corps a en outre une colonne (8) qui est raccordée à une partie du fond qui est de préférence positionnée de manière centrale, laquelle colonne fait saillie vers le haut à partir du fond jusqu'à un côté supérieur de la colonne, à travers laquelle colonne, s'étend un canal (9) à partir d'un entrée (9a) sur le côté supérieur de la colonne jusqu'aux une ou plusieurs buses (12) dans la colonne,
et dans lequel les moyens d'alimentation en eau comprennent une lance d'alimentation en eau (110) qui peut être amenée en mise en prise avec la colonne, à travers laquelle lance d'alimentation, l'eau peut être amenée dans le canal (9) et via les une ou plusieurs buses (12), dans la chambre contenant ledit café torréfié moulu,
et dans lequel de préférence, le fond (2) a une ou plusieurs ouvertures (13) à l'intérieur de ce dernier pour le passage du mélange d'eau et de café à partir de la chambre.

11. Système selon la revendication 10, dans lequel la cartouche (1) comprend un élément de déviation d'écoulement d'eau (3a) qui est agencé par rapport aux une ou plusieurs buses (12) de sorte que le jet ou les jets d'eau sortant des une ou plusieurs buses est (sont) dévié(s) pour provoquer un mouvement tourbillonnant du café torréfié moulu lorsque l'eau est amenée dans le canal (9),
dans lequel, de préférence, ledit élément de déviation d'écoulement d'eau (3a) est formé par une partie de la paroi circonférentielle, par exemple la paroi circonférentielle ayant deux parties semi-circulaires (3b) et deux parties de déviation (3a), chacune intercalée entre lesdites parties semi-circulaires et chacune faisant saillie vers l'intérieur, la une partie de déviation déviant un jet d'eau dans un tourbillon dans le sens des aiguilles d'une montre et l'autre partie de déviation déviant un jet d'eau dans un tourbillon dans le sens inverse des aiguilles d'une montre.

12. Système selon la revendication 10 ou 11, dans lequel la cartouche (1) a un film d'étanchéité inférieur (20) qui est placé le long de la face inférieure du fond afin de recouvrir les une ou plusieurs ouvertures dans le fond,
et dans lequel, de préférence, une partie (2a) du fond est souple, de sorte que la colonne (8) et la partie inférieure (2a) est mobile suite à la mise en prise par la lance d'alimentation en eau (110) sur la colonne, et dans lequel le film d'étanchéité inférieur (20) peut être cassé par le mouvement de ladite colonne et de la partie inférieure (2a), par exemple en déplaçant la colonne vers le base à partir d'une position initiale plus haute jusqu'à une position de distribution plus basse.

13. Système selon une ou plusieurs des revendications précédentes, dans lequel ladite cartouche est maintenue par le support (102) du dispositif de préparation directement au-dessus du réservoir d'ébullition (120), et dans lequel le dispositif est adapté de sorte que ledit mélange est déchargé de ladite cartouche (1) afin de s'écouler directement, sans conduit intermédiaire, de la cartouche dans le réservoir d'ébullition.

14. Procédé pour préparer une boisson à base de café arabica, dans lequel on utilise un système selon une ou plusieurs des revendications précédentes.

15. Dispositif de préparation de boisson à base de café arabica destiné à être utilisé avec une cartouche à portion unique (1 ; 301) ayant une chambre qui contient du café torréfié moulu et contient éventuellement également un édulcorant, par exemple du sucre,
dans lequel le dispositif de préparation (100) comprend:
un support (102) pour loger la cartouche dans le dispositif de préparation,
des moyens d'alimentation en eau (110) adaptés pour fournir de l'eau,
un réservoir d'ébullition (120) qui est agencé pour recevoir à l'intérieur de celui-ci, l'eau et le café torréfié moulu qui a été déchargé de la cartouche,
dans lequel le dispositif de préparation (100) est adapté pour soumettre l'eau et le café torréfié moulu dans le réservoir d'ébullition (120) à un processus d'ébullition, dans lequel il est amené à une température d'ébullition ou une température proche de l'ébullition,
et dans lequel le dispositif est en outre adapté pour décharger le mélange bouilli dudit réservoir d'ébullition, par exemple, dans une tasse,
**caractérisé en ce que**:
les moyens d'alimentation en eau (110) sont adaptés pour introduire l'eau dans la chambre de la cartouche (1 ; 301) contenant le café torréfié moulu, lorsque la cartouche est mise en oeuvre de sorte que le café torréfié moulu à l'intérieur de cette dernière est entraîné avec l'eau qui est introduite dans la cartouche et est distribué sous la forme d'un mélange avec ladite eau à partir de la cartouche via une ou plusieurs sorties (13), dans lequel les moyens d'alimentation en eau sont de préférence adaptés pour introduire de l'eau non chauffée froide, dans la cartouche,
et dans lequel le réservoir d'ébullition (120) est agencé pour recevoir ledit mélange de la cartouche, et dans lequel ledit réservoir d'ébullition (120) est prévu avec un dispositif de chauffage (130) qui est adapté pour chauffer le mélange dans le réservoir d'ébullition afin de soumettre le mélange au processus d'ébullition.
